# EUROPÄISCHE PATENTSCHRIFT

(11) **EP 2 558 976 B1**
(45) Veröffentlichungstag und Bekanntmachung des Hinweises auf die Patenterteilung: **06.04.2016**
(21) Anmeldenummer: 11723241.3
(22) Anmeldetag: 13.04.2011
(51) Int. Cl.: G06K 7/14

(54) **VERFAHREN ZUR KONKRETISIERUNG EINES SUBSTRATES**
METHOD FOR CONCRETIZING A SUBSTRATE
PROCÉDÉ POUR IDENTIFIER UN SUBSTRAT

(30) Priorität: 14.04.2010 DE 102010014937
(43) Veröffentlichungstag der Anmeldung: 20.02.2013
(73) Patentinhaber: IOSS Intelligente Optische Sensoren & Systeme GmbH, 78315 Radolfzell (DE)
(72) Erfinder: GÄSSLER, Joachim, 78166 Donaueschingen (DE); KONZ, Christian, 78337 Öhningen (DE); RICHTER, Harald, 78315 Radolfzell (DE)
(74) Vertreter: Patentanwälte und Rechtsanwalt Weiß, Arat & Partner mbB
(86) Internationale Anmeldenummer: PCT/EP2011/001864
(87) Internationale Veröffentlichungsnummer: WO 2011/128089

(56) Entgegenhaltungen:
- EP-A2- 1 207 490
- US-A1- 2009 121 027

## Beschreibung

Die Erfindung betrifft ein Verfahren nach Anspruch 1.

### Stand der Technik

Aus dem Stand der Technik sind verschiedene Verfahren zu Konkretisierung eines Substrates bekannt. Dort wird auf ein Substrat ein Code aufgebracht. Dieser Code wird durch eine Code-Lesevorrichtung gelesen. Allerdings weisen die aus dem Stand der Technik bekannten Verfahren den Nachteil auf, dass sie bei einem nicht mehr lesbaren Code ins Leere laufen. Die Konkretisierung eines Substrates kann nicht mehr erfolgen und der damit zusammenhängende Überwachungs- oder Produktionslauf ist entweder unvollständig oder muss gar gestoppt werden.

Aus der Patentliteratur sind Verfahren zum Lesen von Codes bei unterschiedlichen Leseaufgaben bekannt.

In diesem Zusammenhang wird auf die EP 1 207490 A2, sowie die US 2009/121027 A1 hingewiesen, welche ebenfalls ein Verfahren zur Konkretisierung eines Substrats durch eine Code-Lesevorrichtung offenbaren. Aus der deutschen Offenlegungsschrift DE10123406A1 ist ein Verfahren zur Ermittlung unsicherer Bildbereiche in einem Bild mit einem einzigen Matrixcode bekannt.

Aus der deutschen Offenlegungsschrift DE19504912A1 ist ein Verfahren zum Scannen und Zusammensetzen von beschädigten Barcodes bekannt.

Aus dem Dokument DE69132985T2 ist ein Scanner zum Lesen eines Barcodes auf einem Gegenstand bekannt. Durch Mehrfachabtastung von Codefragmenten desselben Codes wird der Codeinhalt rekonstruiert.

Aus dem Dokument DE69629514T2, Abs. [0062, 0063] ist ein Verfahren zum Lesen eines Datamatrix-Codes (DMC) für fehlerhafte oder teilweise verdeckte DMC bekannt.

Aus der PCT-Anmeldung WO07099138A1 ist ein Verfahren zum Positionieren und Herstellen von Codes auf Solarzellen bekannt.

Aus der PCT-Anmeldung WO08118419A1 ist ein Codeleser bekannt, der nur eine Teilfläche des Codes erfaßt; der Code wird aus Teilcodes rekonstruiert.

Aus der PCT-Anmeldung WO04023209A1 ist ein Verfahren zur Rekonstruktion von Barcodes bekannt, die bei einer gegebenen Abbildungsgeometrie bei der Bildaufnahme nicht vollständig abgebildet werden. Nacheinander aufgenommene Bilder von Teilen des Codes werden zu einem Code zusammengesetzt.

Aus der deutschen Offenlegungsschrift DE10137093A1 ist ein Verfahren zur Lokalisierung und/oder Identifizierung eines Codes in einer Bildumgebung unter Verwendung eines neuronalen Netzwerkes bekannt.

Aus der deutschen Offenlegungsschrift DE102004017504A1 ist ein Verfahren zur Rekonstruktion eines Barcodes bekannt, bei dem mehrere Bilder eines einzelnen Codes aufgenommen werden, die jeweils Teile des Barcodes enthalten.

Aus dem Dokument DE60038636T2 ist ein Codeleser mit einer Anzeigevorrichtung bekannt, die das Ende einer erfolgreichen Decodierung oder eines erfolglosen Decodierversuchs signalisiert.

Aus der europäischen Patentanmeldung EP1455298A1 ist ein Verfahren zum Scannen und Decodieren beschädigter Barcodes bekannt.

Aus der europäischen Anmeldung EP582911A2 ist ein Verfahren zum Lokalisierung von Codes auf einem Substrat mittels Scannen eines CCD-Bildes bekannt.

Aus der Anmeldung US20020148899A1 ist ein Verfahren zum Zusammensetzen eines Codes aus Codefragmenten bekannt.

Aus der PCT-Anmeldung WO96009597A1 ist ein Verfahren zum Erkennen und zur Rekonstruktion von beschädigten Barcodes in einer Bildumgebung bekannt.

Die bekannten Verfahren zum Lesen und Decodieren von beschädigten Codes unter Verwendung eines bildgebenden Code-Lesegerätes oder von Codes, die durch ihre Ausdehnung mit einem gegebenen bildgebenden Code-Lesegerät nicht vollständig abgebildet werden können, gehen davon aus, daß bei der Rekonstruktion des Codeinhaltes ein oder mehrere Bilder ein und desselben einzelnen Codes zugrunde gelegt werden. Derartige Verfahren führen dann zu einem erfolgreichen Lesen eines beschädigten Codes, wenn die Art und der Grad der Beschädigung des Codes nur so groß sind, daß eine Rekonstruktion mittels geeigneter Algorithmen noch möglich ist.

### AUFGABE DER ERFINDUNG

Die Aufgabe der Erfindung ist es, ein sicheres und aufwandsarmes Verfahren zur Konkretisierung des Substrats zur Verfügung zu stellen, um auch bei beschädigten Codes ein sicheres Auslesen des Code-Inhalts zu ermöglichen.

### LÖSUNG DER AUFGABE

Zur Lösung der Aufgabe führt das Verfahren nach Anspruch 1, wobei bei der Beschreibung Begriffe mit nachfolgend beschriebener Bedeutung verwendet werden: Die Erfindung bezieht sich auf ein Verfahren zum Erfassen und Decodieren eines Codes auf einem Substrat durch Zusammensetzen von Codefragmenten unter Verwendung eines bildgebenden Codelesers. Als Substrat sollen hier alle in einem Fertigungs-, Herstellungs- oder anderen Überwachungsvorgang eines Produktes verwendeten Materialien in Frage kommen. Insbesondere soll es sich bei dem Substrat um Solarzellen, Wafer oder Solarmodule handeln.

Bei industriellen Fertigungsverfahren ist es häufig erwünscht, wenn nicht gesetzlich vorgeschrieben, ein Produkt während und auch nach dem Fertigungsprozess eindeutig identifizieren zu können. Dies ermöglicht es, die einzelnen, an einem Produkt vorgenommenen Fertigungsschritte zu dokumentieren, um bei dem fertigen Produkt im Nachhinein die einzelnen Fertigungsschritte nachvollziehen zu können. Zu diesem Zweck werden beispielsweise an dem Produkt Codierungen angebracht, die während und nach Abschluß des Fertigungsprozesses mit einem automatischen Code-Lesegerät lesbar sind. Bei den Codierungen kann es sich um eine Anordnung von Zeichen, insbesondere auch Ziffern und Buchstaben handeln, die auf einem Substrat mittels geeigneter Drucktechniken oder physikalischer oder chemischer Beschichtungsverfahren aufgebracht oder durch Nadelprägen, Bohren, Gravieren, LASER-Gravieren, Ätzen oder dergleichen materialabtragende oder materialumformende Verfahren des Substrates erzeugt werden. Beispiele für Codierungen sind ein- oder zweidimensionale Codes (z.B. Barcode, DataMatrix-Code oder QR-Codes). Diese können auf einem Träger, beispielsweise auf einem aufgeklebten Etikett oder Label oder direkt auf dem Produkt aufgebracht sein. Werden die Codierungen direkt auf dem Produkt, Bauteil oder allgemein Substrat aufgebracht, so bezeichnet man derartige Codes auch als "Direct Part Marking Codes" oder DPM-Codes. Bei einem zweidimensionalen DPM-Code sind in einer den Code enthaltenden Fläche rasterförmig rechteckige oder punktförmige Ausnehmungen oder dergleichen Strukturen auf dem Substrat aufgebracht.

Um einen Code auf einem Substrat lesen, d.h. erfassen und decodieren zu können, muß eine für den Code geeignete Code-Lesevorrichtung bereitgestellt werden. Die Code-Lesevorrichtung kann auf den Bereich des Substrates ausgerichtet sein, welchen den Code enthält und der erfaßte Code kann durch einen geeigneten Decodierprozeß oder Decodieralgorithmus, kurz "Decoder" genannt, decodiert werden.

Wird der Code mit einem bildgebenden optischen Codeleser gelesen, so wird das Code-tragende Substrat mit einer geeigneten Beleuchtungsvorrichtung beleuchtet und mittels einer optischen Abbildung des Substrats auf einen Halbleiter-Bildaufnehmer ein digitales Bild erzeugt, das in einem Bildverarbeitungsrechner zum Zweck der Decodierung ausgewertet wird.

Ist abzusehen, daß sich die Oberflächenstruktur oder die produktionsbedingten Veränderungen des Substrats, beispielsweise oberflächenverändernde Prozesse, wie Beschichtungen, Sandstrahlen, Lackieren oder Korrosion, negativ auf die Lesbarkeit der zuvor auf das Substrat aufgebrachten Codierung auswirken können, kann vorgesehen sein, mehrere Codes gleichen Codeinhalts an verschiedenen Stellen des Substrats, vorzugsweise innerhalb eines vorbestimmten Bereiches aufzubringen, um die Lesbarkeit, d.h. die Wahrscheinlichkeit für das sichere Lesen und Erkennen des Codes zu erhöhen. Dabei geht man von der Annahme aus, daß einer der an mehreren Stellen angebrachten Codes gleichen Dateninhalts lesbar ist.

Die Anforderungen an industriell einsetzbare optische Codeleser sind vielfältig und werden bei der Spezifizierung eines optischen Codelesers für eine bestimmte Leseaufgabe festgelegt. Einige Anforderungen seinen hier beispielhaft genannt:
- Lesen von Codes in verschiedenen Drehlagen bezüglich des Lesegerätes, wie dies beispielsweise bei einem handgehaltenen Lesegerät erforderlich ist,
- Lesen von Codes mit unterschiedlicher Skalierungen;: beispielsweise bei einem handgehaltenen Lesegerät durch unterschiedliche Abstände zwischen Lesegerät und Substrat,
- Lesen geometrisch verzerrter Codes, beispielsweise bei schräger Betrachtung oder bei Betrachtung von zylindrischen oder sphärischen Oberflächen,
- Lesen von beschädigten Codes, beispielsweise im Datenbereich der Codes oder im Bereich der sog. Finderpatterns der Codes,
- Zusammensetzen eines Codes aus erkannten Codefragmenten,
- Lesen eines Codes auf einem Substrat, der im Abbildungsbereich des Codelesers einen Störcode, beispielsweise einen nicht mehr gültigen Code aus einem früheren Fertigungsschritt enthält,
- Lesen von Codes, deren Position auf dem Substrat von einem zu einem anderen Substrat variieren kann.

Bei der Bearbeitung von kristallinen Silizium-Wafern zur Herstellung von photovoltaischen Solarzellen wird beispielsweise am Anfang der Prozesskette ein spezifischer Code gleichen Codeinhaltes mehrfach auf das Substrat aufgebracht, wobei die Position des aufgebrachten Codes innerhalb eines vorgegebenen Bereiches des Substrats gezielt oder zufällig variiert, weil vorhersehbar ist, daß beispielsweise beim Siebdrucken von Kontaktierungselektroden ein zuvor geschriebener Code ganz oder teilweise abgedeckt wird. Durch ein mehrfaches Aufbringen des Codes an unterschiedlichen Positionen innerhalb einer vorbestimmten Fläche wird die Wahrscheinlichkeit erhöht, daß ein vollständiger Code erkannt wird.

In einem erfindungsgemässen Verfahren wird ein Substrat konkretisiert. Konkretisierung bedeutet hierbei eine Vereinzelung, Kenntlichmachung oder Wiedererkennung. Die Konkretisierung ist im Rahmen von Herstellungs-, Fertigungs- und Überwachungsprozessen immer öfter notwendig, da neben gesetzlichen Vorschriften auch das Verbraucherempfinden eine schnelle und einfache Rückverfolgbarkeit des Produkts bis zum Produzenten erfordert. In diesem Zusammenhang dient die Konkretisierung auch der Qualitätsüberwachung, sowie der After-Sales-Betreuung von Kunden. Durch die Konkretisierung ist es auch nach Jahren noch möglich, ein Substrat zu identifizieren. Die Identifizierung ist ebenfalls eine alternative Möglichkeit der Konkretisierung. Die Identifizierung ermöglicht, dass Gewährleistungsrechte und - pflichten unproblematisch nachverfolgt werden können. Daneben ermöglicht die Identifizierung weiterhin die Einstellung und Optimierung von Fertigungsprozessen

Das erfindungsgemässe Verfahren spricht von einer Zuordnung oder einem Abgleich der Codes. Die Zuordnung oder der Abgleich der Codes stellt sich in verschiedenerlei Hinsicht dar. Im Einzelnen kann dies auch bedeuten, dass Codefragmente und/oder Fragmentverbände und/oder Fragmentscharen miteinander zu kombinieren, abzugleichen oder einem "Stitching" zuzuführen sind, was nichts anderes bedeutet, als das Codefragmente oder Fragmentverbände oder Fragmentscharen zusammengenäht werden. Als umgangssprachliches Fachwort für die Zuordnung oder den Abgleich hat sich auch das sogenannte "Matching" durchgesetzt. Vom erfindungsgemässen Gedanken der Zuordnung oder des Abgleichs soll auch das Matching mit umfasst sein.

Ausserdem wird bei einem erfindungsgemässen Verfahren ein und derselbe Code mehrmals versetzt oder gedreht zueinander auf dem Substrat angebracht. Der mehrfach aufgebrachte Code hat den gleichen Dateninhalt, kann aber in seinen geometrischen Eigenschaften (Skalierung, Verzerrung) unterschiedlich sein. Dies bedeutet letztendlich nichts anderes, als dass die Codes an verschiedenen Stellen des Substrats derart angebracht werden, als dass nach Möglichkeit bei einem Abgleich von zumindest Codefragmenten oder Fragmentverbänden oder Fragmentscharen der Codes ein im Ergebnis lesbarer Code entsteht. Vorteilhaft ist hierbei die Möglichkeit einer hochflexiblen Handhabung der einzelnen Vorgehensweisen des Verfahrens.

Bei dem erfindungsgemäßen Verfahren können auch Codes gelesen werden, die einzeln betrachtet, auf Grund ihres Zerstörungsgrades, nicht decodierbar sind.

Als Code soll eine Anordnung von Code-Elementen oder Code-Modulen verstanden werden. Die Code-Elemente oder Code-Module umfassen je nach Art des Codes aus Punkte, Kreisflächen, Rechtecken oder Quadrate, welche in der Gesamtheit durch ihre relative Position und Orientierung zueinander einem ein- oder zweidimensionalen Code darstellen. Beispiele für derartige Codes sind Barcode, Data-Matrix-Code ECC200 oder der QR-Code. Code-Elemente oder Code-Module sind die kleinsten Informationseinheiten eines spezifischen Codes. Ihrer Anordnung liegt ein Basisraster zugrunde. Beim Barcode ist dies beispielsweise die kleinste Balken oder Lückenbreite, beim Data-Matrix-Code ist dies die Größe der Modulfläche, bei einer Punktmatrix-Schrift, beispielsweise einem 5x9-Raster, ist dies die Größe eines Einzelpunktes beziehungsweise die Kantenlänge eines dem Punkt umschriebenen Quadrates. Jedes Code-Element oder Code-Modul wird mittels eines Bildbearbeitungsverfahrens bewertet, beispielsweise als schwarz oder weiß, gesetzt oder nicht gesetzt, 1 oder 0. Bei beeinträchtigten oder beschädigten Codes kann es vorkommen, daß die Bildverarbeitung zu keinem eindeutigen, binären Ergebnis führt. In diesem Fall ist vorgesehen, einem Code-Element oder Code-Modul eine Wahrscheinlichkeit zuzuordnen. Liegt beispielsweise der Grauwert eines Code-Elements oder Code-Moduls genau zwischen schwarz und weiß, so gilt der Wert als unsicher und kann mit einer Wahrscheinlichkeit für "gesetzt" von 0,5 bewertet werden.

Unter einem Codefragment soll eine Anordnung von mehreren erkannten Code-Elementen oder Code-Modulen verstanden werden, die als zusammenhängender Verband einen nicht-beschädigten Teil eines Codes darstellen. Das Codefragment umfasst einen identifizierten Bild- oder Codebereich, bei welchem die Zuordnung von Code-Elementen oder Code-Modulen mittels einer nachbarlichen Beziehung in einem Verband von Code-Elementen oder Code-Modulen möglich ist.

Unter einem Fragmentverband soll eine Anordnung von Codefragmenten verstanden werden, die als zu ein und demselben Code gehörig identifiziert wurden. Die Zugehörigkeit eines Codefragments zu ein und demselben Code ist durch die Ortsbeziehung der Codefragmente oder durch andere Beziehungen der Codefragmente untereinander, wie beispielsweise Aufnahmezeitpunkt, Substratgeschwindigkeit bei der Aufnahme oder durch die Beschriftungsvorschrift sichergestellt. Ein Fragmentverband kann ein einzelnes Codefragment umfassen, wenn innerhalb der ausgewerteten Bilder keine weiteren Codefragmente eines einzelnen Codes ermittelt werden.

Unter einer Fragmentschar wird eine an dem Basisraster des Codes ausgerichtete Anordnung von wenigstens zwei Fragmentverbänden verstanden. Eine Fragmentschar wird auf der Basis von bekannten Bildverarbeitungs- und Datenvergleichsverfahren, wie beispielsweise Korrelation, Mustervergleich oder Pattern-Matching, oder unter Einbeziehung charakteristischer Codemerkmale, wie beispielsweise Start-/Stoppzeichen bei Barcodes, Finderpattern, Alternating Pattern, oder andere für den Code charakteristische Merkmale aus der Menge der Fragmentverbände gebildet. Dabei wird a-priori Information, beispielsweise Vorgaben, wie sie beim Schreiben des Codes zur Anwendung kamen, unterstützend verwendet.

Das erfindungsgemäße Verfahren zeichnet sich durch folgende Verfahrensschritte aus:
(1) Von einem vorgegebenen Auswertebereich auf dem Substrat werden mit Hilfe der bildgebenden Code-Leseeinrichtung ein erstes digitales Bild und vorzugsweise mehrere weitere digitale Bilder mit unterschiedlichen Beleuchtungs- oder Aufnahmeparametern erzeugt. Zunächst wird das erste digitale Bild in einem Bildverarbeitungsrechner bearbeitet.
(2) Im Bildverarbeitungsrechner werden Bildbereiche des ausgewählten Bildes identifiziert, die Codefragmente des gesuchten Codes enthalten. Codefragmente anderer Codearten im digitalen Bild werden unterdrückt und die entsprechenden Bildbereiche von der weiteren Bildbearbeitung ausgeklammert, beispielsweise Teile von eindimensionalen Barcodes, Barcodefragmente, zweidimensionalen Matrixcodes oder Schriftzeichen oder andere Strukturen, die nicht Teil der gesuchten Codierung sind.
(3) Die Codefragmente aus Schritt (2) werden zusammen mit ihren Lageinformationen, d.h. Ihren ursprünglichen Bezugsgrößen (z.B. Winkellage, Koordinaten,

Aufnahmezeitpunkt, etc.) im ursprünglichen, digitalen Bild, in einem Speicher zwischengespeichert.
(4) In einem ersten Prüfungsschritt werden die Lageinformationen der Codefragmente verglichen und eine Zuordnung von Codefragmenten zu identischen Codes vorgenommen.
(5) Alle Codefragmente aus Verfahrensschritt (4), die ein und demselben Code zugeordnet wurden, werden zu einem Fragmentverband verknüpft. Die Gesamtheit der Codefragmente ist in der Regel mehreren Fragmentverbänden zuzuordnen, wobei ein Fragmentverband auch ein einziges Codefragment umfassen kann.
(6) Die Fragmentverbände aus Verfahrensschritt (5) werden einem Decoder zugeführt. Da fehlerredundante Codes (z.B. DataMatrix ECC200) einen bestimmten Zerstörungsgrad tolerieren, können teilweise gestörte Codes in diesem Prozeßschritt decodiert werden. Wird der Code erkannt, ist das Verfahren beendet.
(7) Ist der Code nicht decodierbar, werden die ortsverschiedenen Fragmentverbände zunächst auf ein einheitliches Rastermaß normiert. Die Fragmentverbände werden als Bilddaten oder als symbolische Daten, Binärdaten oder als Wahrscheinlichkeiten der erkannten Code-Elemente oder Code-Module in einem Speicher des Bildverarbeitungsrechners zwischengespeichert.
(8) Die Fragmentverbände, welche einzeln auf Grund Ihres nicht rekonstruierbaren Zerstörungsgrades, nicht auswertbar sind, werden nun kombiniert und zwar auf der Basis von bekannten Bildverarbeitungs- und Datenvergleichsverfahren, wie beispielsweise Korrelation, Mustervergleich oder Pattern-Matching, oder unter Einbeziehung charakteristischer Codemerkmale, wie beispielsweise Start-/Stoppzeichen bei Barcodes, Finderpattern, Alternating Pattern, oder andere für den Code charakteristische Merkmale. Dabei wird a-priori Information, beispielsweise Vorgaben, wie sie beim Schreiben des Codes zur Anwendung kamen, unterstützend verwendet. Ergebnis dieses Verfahrensschrittes ist wenigstens eine Fragmentschar, die wenigstens zwei Fragmentverbände umfasst.
(9) Die Fragmentscharen aus Verfahrensschritt (8) werden dem Decoder zugeführt. Wird der Code erkannt, ist das Verfahren beendet.
(10) Wird der Code nicht erkannt, wird das Verfahren mit den Verfahrensschritten (2) bis (9) wiederholt, wobei ein digitales Bild mit unterschiedlichen Beleuchtungs- oder Aufnahmeparametern verwendet wird.
(11) Die Fragmentscharen des ersten digitalen Bildes werden mit denen der weiteren aufgenommenen Bildern kombiniert, indem durch geeignete Verfahren, wie sie unter Verfahrensschritt (8) beschrieben wurden, gemeinsame, überlappende Codebereiche bestimmt werden. Wird der Code erkannt, ist das Verfahren beendet.
(12) Wurde der Code nicht erkannt, so werden den ermittelten Code-Elementen oder Code-Modulen Wahrscheinlichkeiten zugeordnet, die aus den Kombinationen aus Verfahrensschritt (11) gewonnen werden und zwar derart, daß Code-Elemente oder Code-Module, welche in unterschiedlichen Codefragmenten mit dem gleichen Ergebnis bewertet wurden mit einer Erkennungswahrscheinlichkeit 1 belegt werden. Code-Elemente oder Code-Module, welche in unterschiedlichen Codefragmenten mit unterschiedlichen Ergebnissen bewertet wurden oder bei denen die Erkennungswahrscheinlichkeit der Code-Elemente oder Code-Module deutlich kleiner als 1,0 ist, was bedeutet, daß das jeweilige Code-Element nicht sicher gelesen werden konnte, beispielsweise deshalb, weil beispielsweise der Grauwert des Code-Elementes auf einer Skala von 0 (weiß) bis 1,0 (schwarz) im Bereich zwischen 0,3 und 0,7 lag, werden für die weitere Decodierungsversuch variiert, d.h. die Inhalte aller unsicher bestimmten Code-Elemente oder Code-Module werden bis zur Erkennung des Codes permutiert und dem Decoder zugeführt. Wird der Code erkannt, ist das Verfahren beendet.
(13) Wird der Code nicht erkannt, so wird ein Fehlersignal von der Code-Leseeinrichtung zur weiteren Verarbeitung in der Produktionssteuerung zur Verfügung gestellt.

Insbesondere ist im Rahmen eines Ausführungsbeispiels der Erfindung vorgesehen, daß der Code ein ein- oder zweidimensionaler Code und das Substrat eine Solarzelle aus kristallinem oder amorphem Silizium mit aufgedruckten Leiterbahnen sein kann.

Weiter ist im Rahmen eines Ausführungsbeispiels der Erfindung vorgesehen, daß der Code eine lesbare Beschriftung in Form einer OCR-Schrift darstellen kann.

Weiter ist im Rahmen eines Ausführungsbeispiels der Erfindung vorgesehen, daß das Substrat im Auswertebereich vor dem Aufbringen des Codes eine unregelmäßige oder fehlerbehaftete Struktur aufweist und die aufgebrachten Code-Elemente dadurch hervorgerufen teilweise eine Beschädigung aufweisen können.

Weiter ist im Rahmen eines Ausführungsbeispiels der Erfindung vorgesehen, daß der Auswertebereich des Substrats in Produktionsschritten, die dem Aufbringen des Codes auf das Substrat folgen, teilweise abgedeckt oder beschädigt werden kann.

Weiter ist im Rahmen eines Ausführungsbeispiels der Erfindung vorgesehen, daß der Code durch Laserablation oder lokale Umschmelzung mittels eines Laserstrahls auf das Substrat aufgeschrieben werden kann.

Weiter ist im Rahmen eines Ausführungsbeispiels der Erfindung vorgesehen, daß der Code auf einem Substrat aufgebracht sein kann, das sich durch Alterungsprozesse in seiner Struktur verändert und diese Struktur den Code überlagern oder teilweise abdecken kann. Insbesondere ist vorgesehen, den Code auf organischen Oberflächen, wie Schalen von Obst aufzubringen, die bereits vor dem Aufschreiben des Codes im Auswertebereich Fehler aufweisen. Es ist ferner vorgesehen, das erfindungsgemäße Verfahren auf Codes anzuwenden, die auf ein Substrat geschrieben wurden, das sich durch Gebrauch verändert, beispielsweise die Oberfläche eines Katalysators.

### FIGURENBESCHREIBUNG

Die Erfindung wird anhand der Abbildungen näher erläutert.

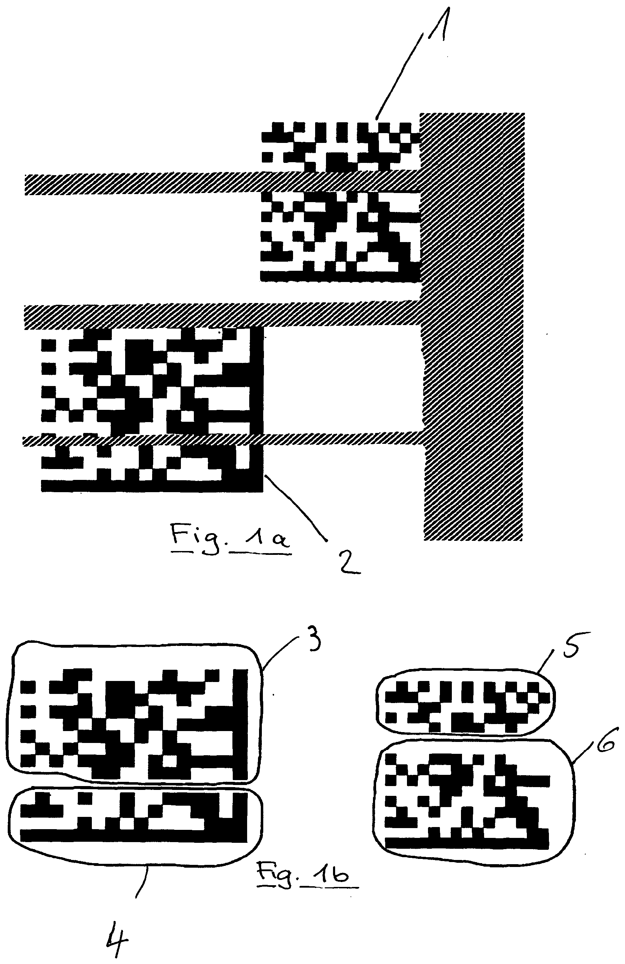

In Fig. 1a ist ein digitales Bild zweier, teilweise durch Fremdstrukturen abgedeckter Codes 1, 2 mit identischem Inhalt zu sehen. Die Fremdstrukturen sind schematisch durch schraffierte Flächen dargestellt. Die Codes 1, 2 sind unterschiedlich skaliert und jeweils einzeln betrachtet auf Grund Ihres Zerstörungsgrades nicht decodierbar. In Fig. 1b sind vier Codefragmente 3, 4, 5, 6 der beiden Codes 1, 2 aus Fig. 1 a dargestellt, die jeweils durch eine geschlossene Linie voneinander separiert sind. Die relativen Positionen und das Basisraster der Codefragmente 3, 4, 5, 6 eines der Codes 1, 2 sind bei der Separation der Codes 1, 2 erhalten geblieben.

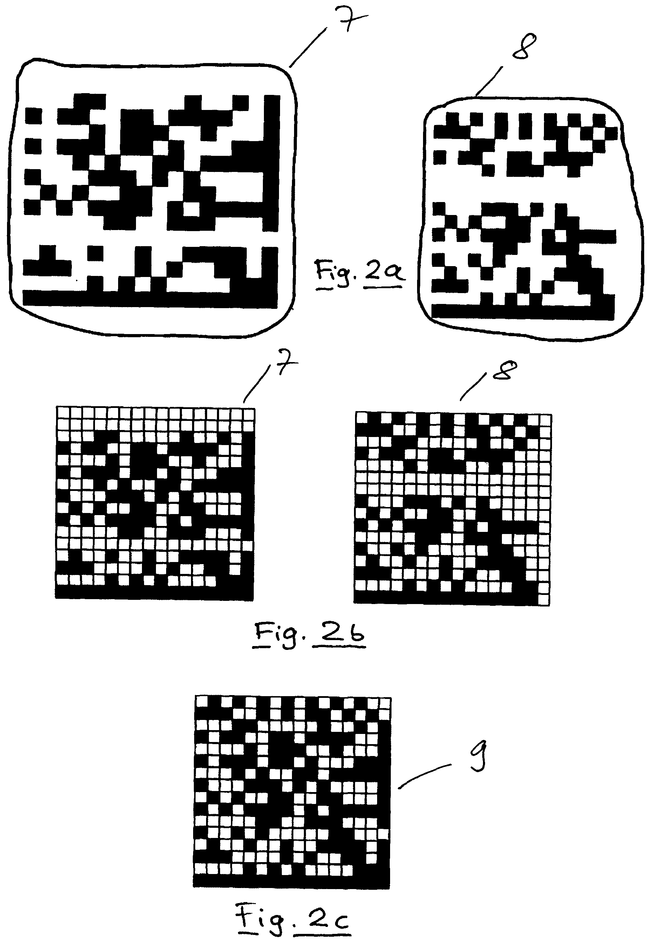

In Fig. 2a sind die vier Codefragmente 3, 4, 5, 6 aus Fig. 1b zu zwei Fragmentverbänden 7, 8 zusammengefaßt. Die Zusammenfassung erfolgte auf Grund vorhandener Lageinformationen. Die zwei Fragmentverbände sind jeweils durch eine geschlossene Linie kenntlich gemacht. In Fig. 2b sind die zwei Fragmentverbände aus Fig. 2a dargestellt, nachdem sie auf ein einheitliches Rastermaß normiert wurden. Die Informationen über die einzelnen Code-Elemente oder Code-Module können als Bilddaten oder als symbolische Daten, beispielsweise Binärdaten in einem Speicher zur Weiterverarbeitung abgelegt sein. In Fig. 2c ist eine Fragmentschar 9 aus einer Anordnung von Code-Elementen oder Code-Modulen dargestellt, die aus den am Basisraster orientierten, normierten Codefragmenten aus Fig. 2b zusammengeführt wurden.

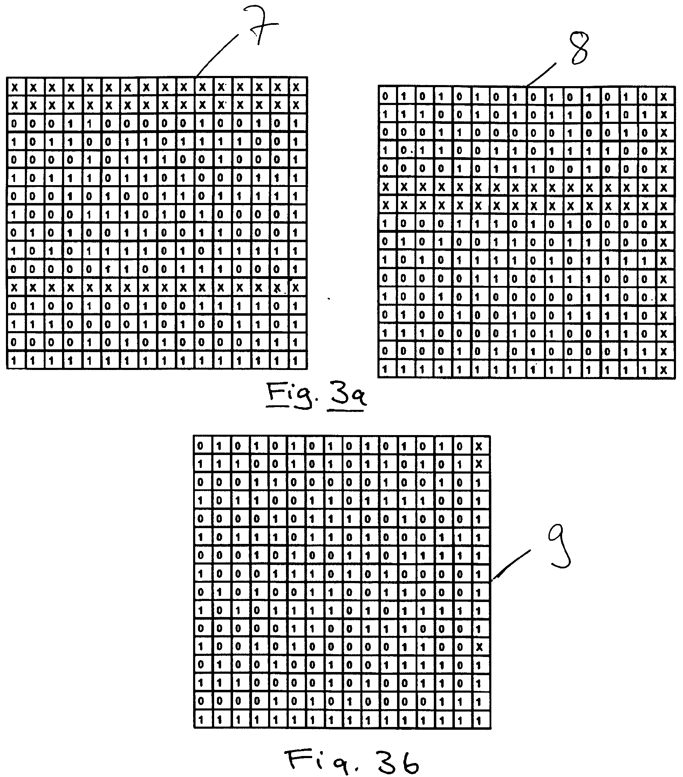

In Fig. 3a sind die Code-Elemente oder Code-Module der beiden Fragmentverbände 7, 8 aus Fig. 2b als Symboldaten dargestellt. Jedem Code-Element oder Code-Modul ist dabei ein Zahlenwert zugeordnet. Für einen sicher erkanntes Code-Element oder Code-Modul wird ein Wert von 0 oder 1 in die dem Basisraster des Codes zugeordneten Tabelle eingetragen. Die Code-Elemente oder Code-Module, die nicht sicher erkannt wurden, sind in den Tabellen der Fig. 3a mit "X" gekennzeichnet; ebenso könnte in die Tabelle eine Wahrscheinlichkeit von 0,5 eingetragen werden.

Die Tabelle der Fig. 3b, die die Fragmentschar 9 aus Fig. 2c repräsentiert, wurde durch zellenweise Addition der Zellenwerte des ersten Fragmentverbandes 7 und des zweiten Fragmentverbandes 8 gewonnen, wobei die Ergebnisse der Addition nach der in Tabelle 1 festgelegten Vorschrift transformiert wurden.

**Tabelle 1:**

| Zellenwert | Zellenwert 2 | Summe | Zellenwert |
|---|---|---|---|
| Fragmentverband 1 (7) | Fragmentverband 2 (8) | | Fragmentschar |
| 0 | 0 | 0 | 0 |
| 1 | 1 | 2 | 1 |
| 1 | X | 1+X | 1 |
| X | 1 | 1+X | 1 |
| 0 | X | X | 0 |
| X | 0 | X | 0 |
| X | X | 2X | 0,5 |

In einer alternativen Zusammenführung der Codefragmente 3, 4, 5, 6 zu einer Codeschar, bei dem den nicht sicher erkannten Code-Elementen oder Code-Modulen der Codefragmente 3, 4, 5, 6 ein zwischen 0 und 1 liegender Wert von X=0,5 zugeordnet ist, ist die Transformationsvorschrift für die Erzeugung der Tabelle der symbolischen Code-Elemente oder Code-Module der Fragmentschar 9 in Tabelle 2 dargestellt.

**Tabelle 2:**

| Zellenwert | Zellenwert 2 | Summe | Zellenwert |
|---|---|---|---|
| Fragmentverband 1 (7) | Fragmentverband 2 (8) | | Fragmentschar |
| 0 | 0 | 0 | 0 |
| 1 | 1 | 2 | 1 |
| 1 | 0,5 | 1,5 | 1 |
| 0,5 | 1 | 1,5 | 1 |
| 0 | 0,5 | 0,5 | 0 |
| 0,5 | 0 | 0,5 | 0 |
| 0,5 | 0,5 | 1 | 0,5 |

Die auf das Substrat aufgebrachten und zu decodierenden Codes 1, 2 können ein- oder zweidimensionale Codes sein und das Substrat kann organisches, metallisch leitendes, anorganisch oder organisch halbleitendes oder isolierendes Material aufweisen und Fehler aufweisen, die vor oder nach dem Aufbringen des Codes 1, 2 auf das Substrat auftreten oder im Material des Substrates vorliegen.

Ein erfindungsgemässes Ausführungsbeispiel eines Verfahrens zum Lesen eines Codes auf einem Substrat, wobei der Code innerhalb eines Auswertebereiches auf dem Substrat durch wenigstens zwei Codefragmente repräsentiert wird und die Codefragmente jeweils wenigstens zwei an unterschiedlichen Positionen innerhalb des Auswertebereiches angeordneten und an einem Basisraster angeordneten Code-Elementen umfassenden, beschädigten Codes zugeordnet sind und wobei von dem Auswertebereich mit einer bildgebenden Code-Lesevorrichtung wenigstens ein digitales Bild erzeugt wird und das wenigstens eine digitale Bild in einem Bildverarbeitungsrechner mit mehreren Speichern ausgewertet und einem Decoder zum Decodieren des einen Codes zugeführt wird, wird das erste mit der Code-Lesevorrichtung erzeugte digitale Bild des Auswertebereichs in einen ersten Speicher des Bildverarbeitungsrechners eingelesen. Anschliessend werden im Bildverarbeitungsrechner diejenigen Bildbereiche des digitalen Bildes identifiziert, welche Codefragmente von der Art des gesuchten Codes umfassen. Codefragmente anderer Codearten im digitalen Bild werden unterdrückt und die entsprechenden Bildbereiche von der weiteren Bildbearbeitung ausgeklammert.

Danach werden die Codefragmente zusammen mit ihren Lageinformationen im ursprünglichen digitalen Bild in einem zweiten Speicher des Bildverarbeitungsrechners zwischengespeichert.

Weiter werden dann in einem ersten Prüfungsschritt die Lageinformationen der Codefragmente verglichen und eine Zuordnung von Codefragmenten zu identischen Codes vorgenommen.

Danach werden alle Codefragmente die ein und demselben Code zugeordnet wurden, zu wenigstens einem Fragmentverband verknüpft, wobei der Fragmentverband wenigstens ein Codefragment aufweist.

Anschliessend werden dann die Fragmentverbände einem Decoder zugeführt. Wird der Code erkannt, ist das Verfahren beendet.

Ansonsten werden die ortsverschiedenen Fragmentverbände zunächst auf ein einheitliches Rastermaß normiert und die normierten Fragmentverbände werden als Bilddaten, symbolische Daten, Binärdaten oder als Erkennungswahrscheinlichkeiten der Code-Elemente in einem dritten Speicher des Bildverarbeitungsrechners zwischengespeichert.

Dann werden die Fragmentverbände auf der Basis von bekannten Bildverarbeitungs- und Datenvergleichsverfahren zu Fragmentscharen kombiniert.

Anschliessend werden die Fragmentscharen dem Decoder zugeführt. Wird der Code erkannt, ist das Verfahren beendet.

Ansonsten wird das Verfahren mit den oben beschriebenen Verfahrensschritten wiederholt, wobei ein digitales Bild mit gegenüber den vorherig bearbeiteten digitalen Bildern unterschiedlichen Beleuchtungs- oder Aufnahmeparametern verwendet wird. Die Fragmentscharen des ersten digitalen Bildes werden mit denen der weiteren digitalen Bildern kombiniert, indem die Fragmentscharen an identischen, überlappenden Codebereichen zusammengesetzt werden, worauf die zusammengesetzten Fragmentscharen dem Decoder zugeführt werden. Wird der Code erkannt, ist das Verfahren beendet.

Ansonsten werden den ermittelten Code-Elementen Wahrscheinlichkeiten zugeordnet, die aus den Kombinationen von Fragmentscharen aus dem vorigen Verfahrensschritt gewonnen werden und zwar derart, daß Code-Elemente, welche in unterschiedlichen Fragmentscharen mit dem gleichen Ergebnis bewertet wurden mit einer Erkennungswahrscheinlichkeit 1 belegt werden und Code-Elemente, welche in unterschiedlichen Fragmentscharen mit unterschiedlichen Ergebnissen bewertet wurden oder bei denen die Erkennungswahrscheinlichkeiten der Code-Elemente jeweils deutlich kleiner als 1,0 waren, werden für die weitere Decodierungsversuche variiert und die Inhalte aller als unsicher bestimmten Code-Elemente werden bis zur Erkennung des Codes permutiert und dem Decoder zugeführt. Wird der Code erkannt, ist das Verfahren beendet.

Ansonsten wird ein Fehlersignal von der Code-Lesevorrichtung zur weiteren Verwendung zur Verfügung gestellt.

Bei einem erfindunsgsgemässen Ausführungsbeispiel des Codes handelt es sich um einen zweidimensionalen Code. Das Substrat kann in einem Ausführungsbeispiel eine Solarzelle aus kristallinem Silizium mit aufgedruckten Leiterbahnen sein.

Bei einem anderen Ausführungsbeispiel des Codes handelt es sich um einen eindimensionalen Code. Das Substrat kann erneut eine Solarzelle aus kristallinem Silizium mit aufgedruckten Leiterbahnen sein.

Ein erfindungsgemässer Code weist eine lesbare Beschriftung in Form einer OCR-Schrift auf, wobei das Substrat eine Solarzelle aus kristallinem Silizium mit aufgedruckten Leiterbahnen sein kann.

In einem erfindungsgemässen Verfahren kann das Substrat im Auswertebereich vor dem Aufbringen des Codes eine unregelmäßige oder fehlerbehaftete Struktur aufweisen und die aufgebrachten Code-Elemente dadurch hervorgerufen teilweise eine Beschädigung aufweisen.

Mit dem erfindunsgemässen Verfahren sollen auch Auswertebereiche des Substrats in Produktionsschritten, die dem Aufbringen des Codes auf das Substrat folgen, teilweise abgedeckt oder beschädigt werden, trotzdem konkretisiert werden.

In einem anderen Ausführungsbeispiel ist der Code ein mittels eines Laserstrahls erzeugter Code, wobei das Substrat eine Solarzelle aus kristallinem Silizium mit aufgedruckten Leiterbahnen sein kann.

Das Substrat kann auch eine Dünnschicht-Solarzelle sein.

Mit dem erfindungsgemässen Verfahren soll auch ein Code, der auf einem Substrat aufgebracht sein kann, das sich durch Alterungsprozesse in seiner Struktur verändert und diese Struktur den Code überlagert oder teilweise abdeckt, lesbar sein.

Das Substrat kann auch ein organisches Halbleitermaterial sein.

Ein erfindungsgemässes Programm soll derart gestaltet sein, dass wenn es auf einem Computer läuft oder in einem Computer geladen ist, den Computer veranlaßt, ein Verfahren gemäß der oben beschriebenen Art durchzuführen.

Ausserdem soll ein Computerprogrammprodukt derart gestaltet sein, dass ein Programm, wie im vorigen Abschnitt beschrieben, gespeichert und abspielbar ist.

## Patentansprüche

1. Verfahren mit folgenden Schritten:
- Erzeugen eines ersten digitalen Bildes von einem zumindest einen zweifach aufgebrachten Code (1, 2) enthaltenden Auswertebereich auf einem Substrat mit Hilfe einer bildgebenden Code-Lesevorrichtung;
- Identifizieren von Bildbereichen des Bildes welche Codefragmente (3, 4, 5, 6) eines gesuchten Codes (1, 2) enthalten;
- Zwischenspeichern der Codefragmente (3, 4, 5, 6) mit ihren Lageinformationen;
- Vergleichen der Lageinformationen der Codefragmente (3, 4, 5, 6) und Zuordnung von Codefragmenten (3, 4, 5, 6) zu identischen Codes (1, 2);
- Verknüpfung aller Codefragmente (3, 4, 5, 6) die ein und demselben Code (1, 2) zugeordnet werden in einem oder mehreren Fragmentverbände (7, 8);
- Zuführen der Fragmentverbände (7, 8) zu einem Decoder;
- Wobei das Verfahren beendet wird, wenn der Code (1,2) erkannt wurde.

2. Verfahren nach Anspruch 1, wobei im Fall, dass der Code (1, 2) nicht erkannt wird, die ortsverschiedenen Fragmentverbände (7, 8) zunächst auf ein einheitliches Rastermass normiert werden und die Fragmentverbände (7, 8) welche einzeln auf Grund ihres nicht rekonstruierbaren Zerstörungsgrades, nicht ausgewertet werden können, wenigstens zu einer Fragmentschar (9) gefasst werden und wobei die wenigstens eine Fragmentschar (9) dem Decoder zugeführt wird; wobei das Verfahren beendet wird, wenn der Code (1,2) erkannt wurde.

3. Verfahren nach Anspruch 2, wobei im Fall das der Code nicht erkannt wird, das Verfahren nach Anspruch 2 wiederholt wird, wobei ein digitales Bild mit unterschiedlichen Beleuchtungs- oder Aufnahmeparametern verwendet wird, wobei die Fragmentschar des ersten digitalen Bildes mit denen der weiteren aufgenommenen Bildern kombiniert werden, indem durch geeignete Verfahren gemeinsame, überlappende Codebereiche bestimmt werden, wobei das Verfahren beendet wird, wenn der Code (1,2) erkannt wurde.

4. Verfahren nach Anspruch 3, wobei im Fall dass der Code nicht erkannt wird, ermittelte Code-Elemente oder Code-Module Wahrscheinlichkeiten zugeordnet werden, gefolgt durch einen weiteren Decodierungsversuch, wobei das Verfahren beendet wird, wenn der Code erkannt wurde und wenn der Code nicht erkannt wird, wird ein Fehlersignal von der Code-Leseeinrichtung zur weiteren Verarbeitung in der Produktionssteuerung zur Verfügung gestellt wird.

## Claims

1. Method having the following steps:
- generating a first digital image of an evaluation area, containing at least a twice applied code (1, 2), on a substrate with the aid of an imaging code reading device;
- identifying image regions of the image which contain code fragments (3, 4, 5, 6) of a code (1, 2) being sought;
- temporarily storing the code fragments (3, 4, 5, 6) with their positional information;
- comparing the positional information of the code fragments (3, 4, 5, 6) and assigning code fragments (3, 4, 5, 6) to identical codes (1, 2);
- linking all code fragments (3, 4, 5, 6) which are assigned to one and the same code (1, 2) in one or more fragment arrays (7, 8);
- feeding the fragment arrays (7, 8) into a decoder;
- the method being completed when the code (1,2) has been recognised.

2. Method according to Claim 1, wherein, if the code (1, 2) is not recognised, the fragment arrays (7, 8) of different locations are firstly normalised to a uniform grid dimension and the fragment arrays (7, 8) which cannot be evaluated individually owing to their non-reconstructible degree of destruction are at least combined to form a fragment group (9) and the at least one fragment group (9) is fed into the decoder; the method being completed when the code (1,2) has been recognised.

3. Method according to Claim 2, wherein, if the code is not recognised, the method according to Claim 2 is repeated, a digital image with different illumination or recording parameters being used, the fragment group of the first digital image being combined with those of the further recorded images by determining common, overlapping code areas by means of suitable methods, the method being completed when the code (1,2) has been recognised.

4. Method according to Claim 3, wherein, if the code is not recognised, established code elements or code modules are assigned probabilities, followed by a further decoding attempt, the method being completed when the code has been recognised and if the code is not recognised, an error signal is provided by the code reading device for further processing in the production control.

## Revendications

1. Procédé aux étapes suivantes consistant à:
- générer une première image numérique d'une zone d'évaluation contenant au moins un code (1, 2) appliqué deux fois sur un substrat à l'aide d'un dispositif de lecture de code d'imagerie;
- identifier les zones de l'image qui contiennent des fragments de code (3, 4, 5, 6) d'un code (1, 2) recherché;
- mémoriser temporairement les fragments de code (3, 4, 5, 6) avec leurs informations de position;
- comparer les informations de position des fragments de code (3, 4, 5, 6) et associer les fragments de code (3, 4, 5, 6) à des codes identiques (1, 2);
- coupler tous les fragments de code (3, 4, 5, 6) qui sont associés à un même code (1, 2) dans une ou plusieurs associations de fragments (7, 8);
- alimenter les associations de fragments (7, 8) vers un décodeur;
- le procédé étant terminé lorsque le code (1, 2) a été détecté.

2. Procédé selon la revendication 1, dans lequel, au cas où le code (1, 2) n'est pas détecté, les associations de fragments (7, 8) à différents endroits sont tout d'abord normalisées à une dimension de trame unitaire et les associations de fragments (7, 8) qui, du fait de leur degré de destruction non reconstructible, ne peuvent pas être évaluées individuellement sont au moins regroupés en un ensemble de fragments (9) et l'au moins un ensemble de fragments (9) est alimenté vers le décodeur, le procédé étant terminé lorsque le code (1, 2) a été détecté.

3. Procédé selon la revendication 2, dans lequel, au cas où le code n'est pas détecté, le procédé selon la revendication 2 est répété, dans lequel est utilisée une image numérique avec des paramètres d'éclairage ou d'exposition différents, dans lequel l'ensemble de fragments de la première image numérique est combiné avec ceux des autres images prises en déterminant, par des procédés appropriés, des zones de code communes qui se recouvrent, le procédé étant terminé lorsque le code (1, 2) a été détecté.

4. Procédé selon la revendication 3, dans lequel, au cas où le code n'est pas détecté, des probabilités sont associées à des éléments de code ou des modules de code déterminés, suivi d'une nouvelle tentative de décodage, le procédé étant terminé lorsque le code a été détecté et, si le code n'est pas détecté, un signal d'erreur est mis à disposition par le dispositif de lecture de code pour traitement ultérieur dans la commande de production.
